# EUROPÄISCHE PATENTANMELDUNG

(11) **EP 1 237 267 A2**
(43) Veröffentlichungstag der Anmeldung: **04.09.2002**
(21) Anmeldenummer: 02100196.1
(22) Anmeldetag: 28.02.2002
(51) Int. Cl.: H02M 3/28, H02M 3/337

(54) **Konverter**

(30) Priorität: 01.03.2001 DE 10109967
(71) Anmelder: Philips Corporate Intellectual Property GmbH, 52066 Aachen (DE); Koninklijke Philips Electronics N.V., 5621 BA Eindhoven (NL)
(72) Erfinder: Boeke, Ulrich, Philips Corp. Intell, Prop, GmbH, 52066, Aachen (DE)
(74) Vertreter: Volmer, Georg, Dipl.-Ing.

(57) **Zusammenfassung**

Die Erfindung betrifft einen Konverter zum Umsetzen einer DC-Spannung U_{Bat} in eine Ausgangs-Gleichspannung Uₒᵤₜ, insbesondere bei TV- oder Computerbildschirmen. Der Konverter umfasst eine Vollbrückenschaltung 7 zum Zerhacken der DC-Spannung U_{Bat} in eine AC-Spannung U∼ an ihrem Ausgang und einen Schaltkreis 3 zum Umwandeln der AC-Spannung U∼ in die Ausgangs-Gleichspannung Uₒᵤₜ des Konverters. Der Konverter umfasst weiterhin eine Steuerschaltung 5 zum Erzeugen von Steuersignalen zum Ansteuern von steuerbaren Schaltelementen S1 ... S4 in der Vollbrückenschaltung. Es ist die Aufgabe der Erfindung, einen derartigen Konverter so weiterzubilden, dass die von ihm erzeugte Ausgangsspannung Uₒᵤₜ auch während einer Umschaltung der Vollbrückenschaltung zwischen zwei Betriebsmodi stabil bleibt. Diese Aufgabe wird erfindungsgemäß dadurch gelöst, dass die Steuerschaltung 5 diese Umschaltung nur während eines Totzeitintervalls tₜₒₜ vornimmt, währenddessen zumindest eines der Schaltelemente S1 ... S4 ausgeschaltet ist.

## Beschreibung

Die Erfindung betrifft einen Konverter zum Umsetzen einer DC-Spannung (DC: direct current) in eine Ausgangsgleichspannung, insbesondere bei TV- oder Computebildschirmen gemäß dem Oberbegriff des Patentanspruchs 1.

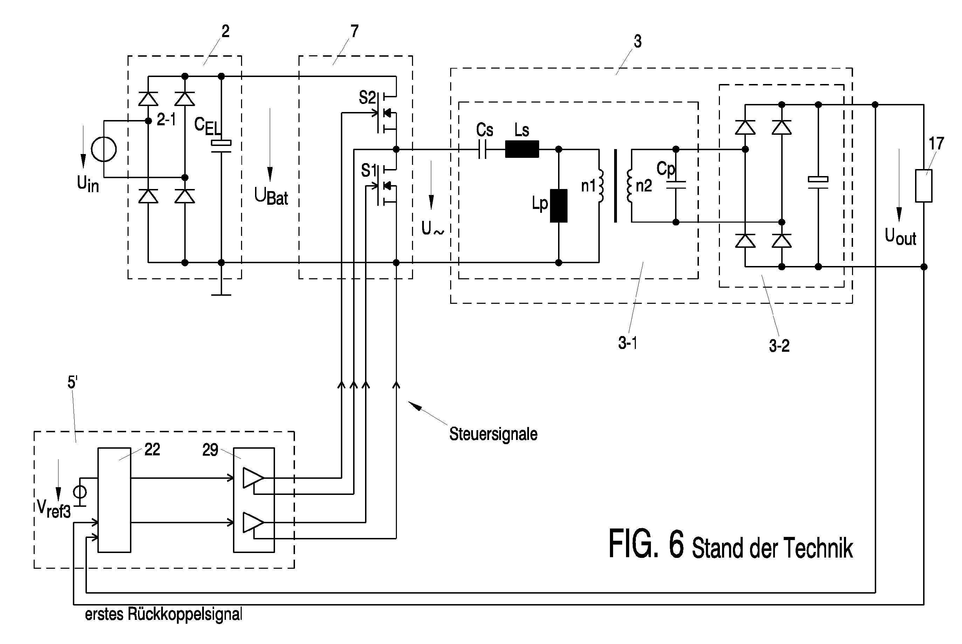

Ein derartiger Konverter ist beispielsweise aus dem US-Patent US 5 777 859 in Verbindung mit einem Datenblatt für die Hochleistungs-Resonanzsteuereinrichtungen MC 33067 und MC 34067 von Motorola Inc. aus dem Jahre 1996 bekannt und in Fig. 6 dargestellt.

Der Konverter gemäß Fig. 6 umfasst eine erste Gleichrichtereinrichtung 2 zum Umwandeln einer Eingangsspannung Uᵢₙ in eine DC-Spannung U_{Bat}. Die Gleichrichtereinrichtung 2 wird gebildet durch einen Vollweg-Diodenbrückengleichrichter 2-1 und einen nachgeschalteten Glättungskondensator C_{EL}.

Der Konverter umfasst weiterhin eine Brückenschaltung 7 mit steuerbaren Schaltelementen S1, S2 zum Umwandeln der DC-Spannung U_{Bat} in eine AC-Spannung U∼ (AC: alternating current), welche von einem nachgeschalteten Schaltkreis 3 in eine Ausgangs-Gleichspannung Uₒᵤₜ des Konverters umgswandelt wird.

Der Schaltkreis 3 umfasst einen Resonanzleistungskonverter 3-1 und einen nachgeschalteten zweiten Gleichrichter 3-2. Der Leistungskonverter 3-1 weist parallel zu seinem Eingang eine Reihenschaltung auf, welche aus einem Kondensator Cs und zwei Spulen Ls, Lp besteht. Parallel zu der Spule Lp ist die Primärseite eines Transformators 13 mit der primärseitigen Windungszahl n1 geschaltet. Sekundärseitig besitzt der Transformator n2-Windungen, zu denen ein Kondensator Cp parallel geschaltet ist. Eine Spannung über dem Kondensator Cp bildet die Ausgangsspannung des Leistungskonverters 3-1. Der zweite Gleichrichter 3-2, der analog zu dem eisten Gleichrichter 2 aufgebaut ist, empfängt an seinem Eingang die Ausgangsspannung des Leistungskonverters 3-1 und erzeugt an seinem Ausgang die Ausgangsspannung des Konverters Uₒᵤₜ.
Diese Ausgangs-Gleichspannung Uₒᵤₜ wird üblicherweise an eine Last 17, welche an den Konverter angeschlossen ist, ausgegeben. Zur Ansteuerung der Schaltelemente S1, S2 der Brückenschaltung 7 umfasst der Konverter weiterhin eine Steuerschaltung 5', welche die Steuersignale im Ansprechen auf ein erstes Rückkoppelsignal, welches die Größe der Ausgangs-Gleichspannung Uₒᵤₜ des Konverters repräsentiert, erzeugt.

Der Wirkungsgrad des Resonanzleistungskonverters 3-1 sinkt erheblich, wenn er mit Eingangsspannungen, d.h. AC-Spannungen U∼ betrieben wird, die über einen großen Spannungswertebereich verteilt sind; in diesem Fall entstehen unerwünschte Verluste in dem Leistungskonverter 3-1 aufgrund darin zirkulierender Blindleistung.

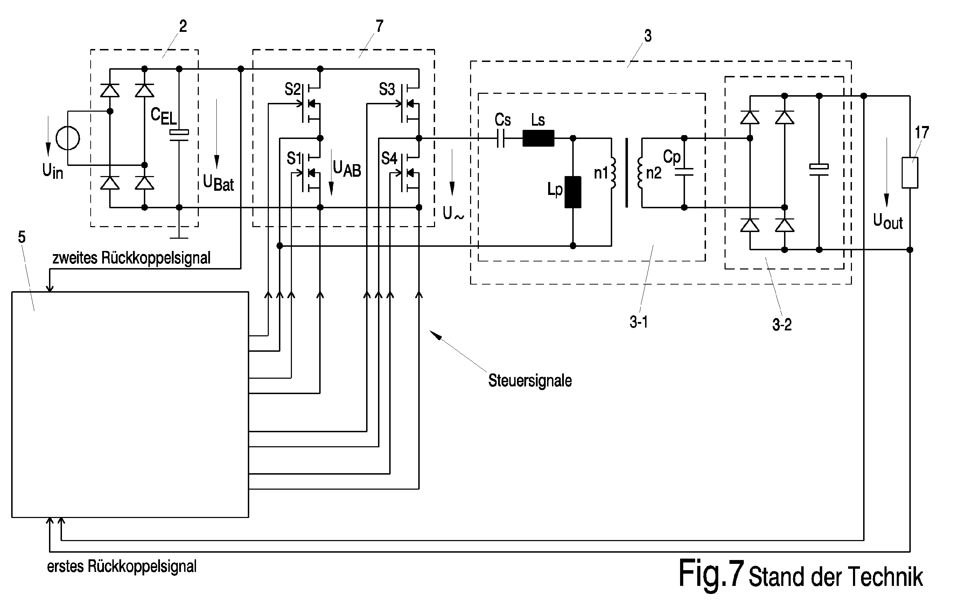

Diesem Nachteil kann dadurch begegnet werden, dass die Brückenschaltung 7 als Vollbrückenschaltung gemäß Fig. 7 ausgebildet ist. Die Vollbrückenschaltung 7 umfasst zwei parallele Zweige mit jeweils zwei in Reihe geschalteten steuebaren Schaltelemente S1 ... S4. Die Eingangsspannung DC-Spannung U_{Bat} wird der Vollbrückenschaltung 7 parallel zu ihren Zweigen zugeführt, während sie die AC-Spannung U∼ zwischen den beiden Schaltelementen der beiden parallelen Zweige bereitstellt.

Eine Steuerschaltung 5 erzeugt Steuersignale zum Ansteuern jedes einzelnen der steuerbaren Schaltelemente S1, S2 gemäß einem ersten, nachfolgend als "Halbbrückenmodus" oder gemäß einem zweiten, nachfolgend als "Vollbrückenmodus" bezeichneten Konverterbetriebsmodus. Die Umschaltung zwischen den beiden Modi erfolgt durch die Steuerschaltung 5 nach Maßgabe durch ein zweites Rückkoppelsignal, welches die Größe der DC-Spannung U_{Bat} repräsentiert.

Bei niedrigen DC-Spannungen von z.B. 100 bis 200 V arbeitet die Brückenschaltung 7 in dem Vollbrückenmodus mit einem Phasenrand von 180°. Bei höheren DC-Spannungen von z.B. 200 bis 380 V arbeitet die Brückenschaltung 7 demgegenüber in dem Halbbrückenmodus. Durch eine entsprechende Umschaltung der Betriebsmodi wird erreicht, dass der Wertebereich der Eingangsspannung AC-Spannung U∼ des Resonanzleistungskonverters 3-1 in geeigneter Weise halbiert wird gegenüber der reinen DC-Spannung U_{Bat}.

Es ist die Aufgabe der Erfindung, einen bekannten Konverter derart weiterzubilden, dass die von ihm erzeugte Ausgangsspannung Uₒᵤₜ auch während einer Umschaltung seines Betriebsmodus' zwischen einem Vollbrückenmodus und einem Halbbrückenmodus stabil bleibt.

Diese Aufgabe wird erfindungsgemäß durch den Gegenstand des Patentanspruchs 1 gelöst. Genauer gesagt erfolgt erfindungsgemäß die Umschaltung von dem Vollbrückenmodus in den Halbbrückenmodus oder umgekehrt nur während eines Totzeitintervalls, währenddessen zumindest eines der Schaltelemente der Vollbrückenschaltung lastfrei, d.h. ausgeschaltet ist.

Dies hat den Vorteil, dass unerwünschte Spannungsschwankungen, wie sie bei einer Umschaltung bei belasteten Schaltelementen entstehen würden, vermieden werden.

Gemäß einem ersten Ausführungsbeispiel weist der Konverter eine erste Vergleicherschaltung auf zum Erzeugen eines Vergleichssignals als Binärsignal nach Maßgabe durch das Ergebnis eines Vergleiches der DC-Spannung mit einer ersten und einer zweiten Vergleichsspannung. Vorteilhafterweise ist diese erste Vergleicherschaltung als Schmitt-Trigger ausgebildet, welcher eine Hysterese-Schleife auf Basis der ersten und der zweiten Vergleichsspannung definiert, wodurch das erzeugte Vergleichssignal gegenüber kleineren Schwankungen der DC-Spannung stabil gehalten wird.

Es ist weiterhin von Vorteil, wenn die Steuerung zumindest eine Anpassungsschaltung aufweist, zum Durchführen einer Pegelanpassung der Steuersignale für die Schaltelemente der Vollbrückenschaltung an vorgegebene Pegelerfordernisse.

Weitere vorteilhafte Ausgestaltungen des Konverters sind Gegenstand der Unteransprüche.

Der Beschreibung sind die folgenden Figuren beigefügt, wobei
- Fig. 1: einen Konverter gemäß der vorliegenden Erfindung,
- Fig. 2: eine Steuerschaltung des Konverters gemäß Fig. 1,
- Fig. 3: eine Logikschaltung der Steuerschaltung nach Fig. 2,
- Fig. 4: Signalverläufe innerhalb der Steuerschaltung gemäß Fig. 2 in einem Halbbrückenmodus,
- Fig. 5: Signalverläufe innerhalb der Steuerschaltung gemäß Fig. 2 während eines Vollbrückenmodus',
- Fig. 6: einen Konverter nach dem Stand der Technik, und
- Fig. 7: eine bekannte Weiterbildung des Konverters gemäß Fig. 6
zeigt.

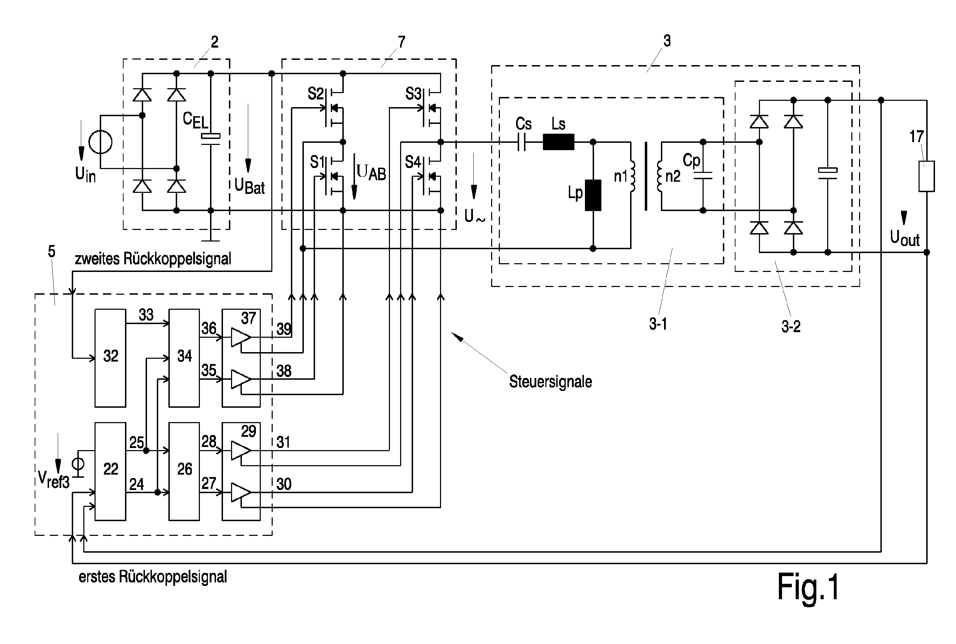

Nachfolgend werden zwei Ausführungsbeispiele der vorliegenden Erfindung unter Bezugnahme auf die Fig. 1 bis 5 näher beschrieben.

Fig. 1 zeigt im wesentlichen den bereits oben unter Bezugnahme auf Fig. 7 beschriebenen Konverter. Gleiche Bezugszeichen in den beiden Figuren bezeichnen gleiche Komponenten der beiden Konverter.

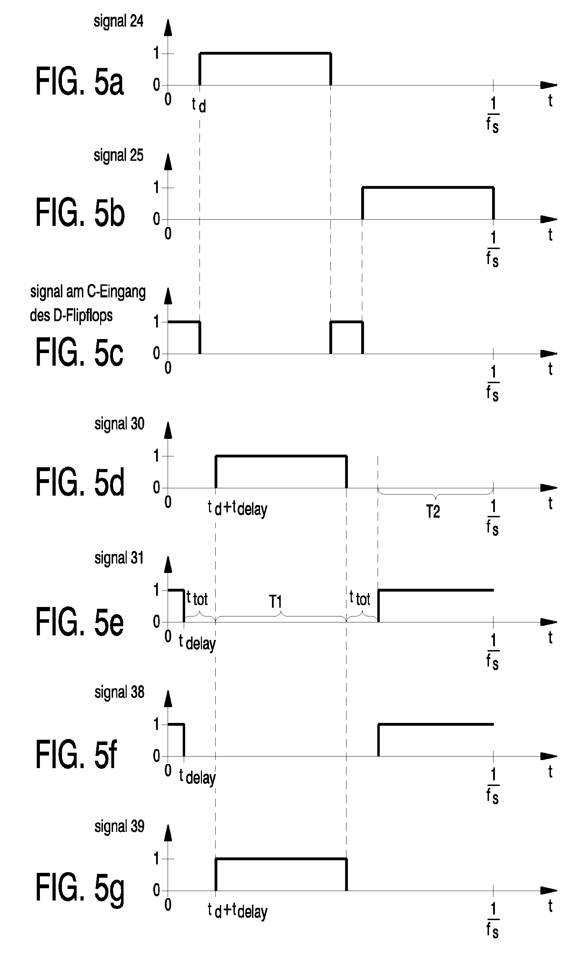

Der Konverter gemäß der vorliegenden Erfindung und der bekannte Konverter gemäß Fig. 7 unterscheiden sich allerdings durch den Aufbau der Steuerschaltung gemäß Fig. 5.

Die Steuerschaltung 5 gemäß der vorliegenden Erfindung, wie sie in Fig. 1 dargestellt ist, umfasst eine erste Vergleicherschaltung 32 zum Erzeugen eines binären Vergleichssignals und eine zweite Vergleicherschaltung 22 zum Erzeugen eines vierten Steuersignals 24 zum Ansteuern des Schaltelementes S4 sowie zum Erzeugen eines dritten Steuersignals 25 zum Ansteuern des dritten Schaltelementes S3.
Alle Schaltelemente S1-S4 sind vorzugsweise als Leistungshalbleiter ausgebildet.

Gemäß Fig. 1 umfasst die Steuerschaltung 5 weiterhin eine Logikschaltung 34 zum Erzeugen eines verzögerten ersten Steuersignals 35 zum Ansteuern des ersten Schaltelementes S1 der Vollbrückenschaltung 7 sowie zum Erzeugsn eines verzögerten zweiten Steuersignals 36 zum Ansteuern des zweiten Schaltelementes S2. Die Erzeugung des ersten und zweiten Steuersignals 35, 36 erfolgt durch Verarbeitung des dritten und vierten Steuersignals, wie sie von der zweiten Vergleicherschaltung 22 ausgegeben werden im Ansprechen auf das binäre Vergleichssignal 33. Die Steuerschaltung 5 umfasst weiterhin eine Verzögerungsschaltung 26 zum Verzögern des dritten und vierten Steuersignals um zumindest näherungsweise eine Zeitdauer, welche der Verarbeitungsdauer eines Signals durch die Logikschaltung 34 entspricht, so dass die jeweiligen Steuersignale an den Ausgängen der Logikschaltung 34 und der Verzögerungsschaltung 26 zeitlich aufeinander abgestimmt sind. Schließlich umfasst die Steuerschaltung 5 noch zwei Anpassungsschaltungen 29 und 37 zum Durchführen einer Pegelanpassung des verzögerten ersten, zweiten, dritten und/oder vierten Steuersignals an durch die zugehörigen Schaltelemente S1 ... S4 vorgegebene Pegelerfordernisse.

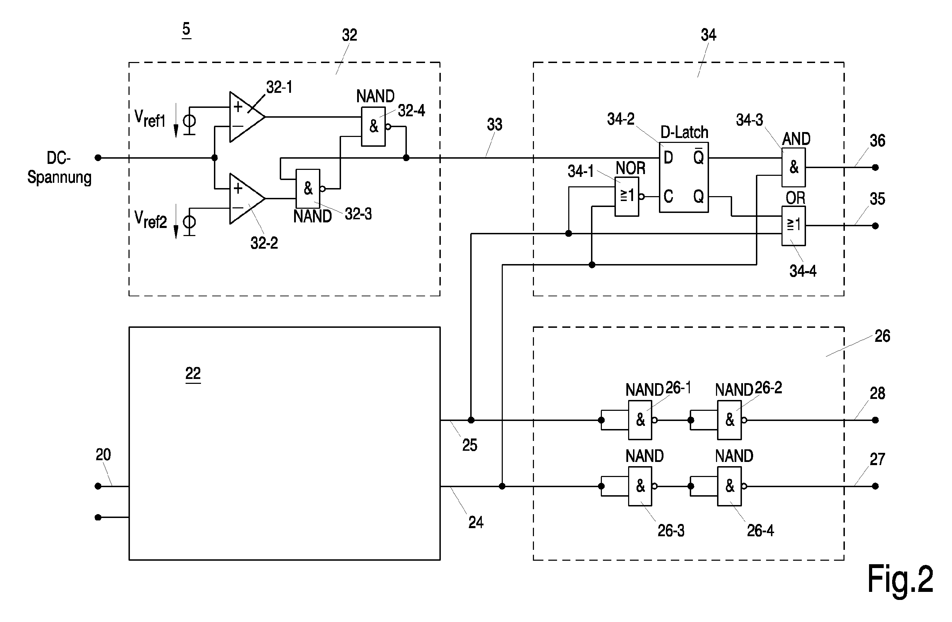

Die soeben aufgezählten Teilschaltungen 22, 26, 32, 34 der Steuerschaltung 5 werden nachfolgend anhand von Fig. 2 näher beschrieben.

In der Vergleicherschaltung 32 wird die DC-Spannung des Konverters auf den invertierenden Eingang eines ersten Operationsverstärkers 32-1 und den nicht-invertierenden Eingang eines zweiten Operationsverstärkers 32-2 gegeben. Der erste Operationsverstärker 32-1 vergleicht die DC-Spannung mit einer ersten vorgegebenen Bezugsspannung V_{ref 1}, welche an seinem nicht-invertierenden Eingang anliegt, während der zweite Operationsverstärker 32-2 die DC-Spannung mit einer zweiten vorgegebenen Bezugsspannung V_{ref 2} vergleicht, welche an dessen invertierenden Eingang angelegt ist. Der Ausgang des zweiten Operationsverstärkers 32-2 ist auf einen Eingang eines NAND-Gliedes 32-3 gelegt, auf dessen zweiten Eingang der Ausgang der ersten Vergleicherschaltung 32 rückgekoppelt ist. Der Ausgang dieses ersten NAND-Gliedes 32-3 bildet zusammen mit dem Ausgang des ersten Operationsverstärkers 32-1 die Eingänge für ein zweites NAND-Glied 32-4, dessen Ausgang zugleich den Ausgang der ersten Vergleicherschaltung 32 bildet.

Die beschriebene Schaltungsanordnung der ersten Vergleicherschaltung 32 bildet einen Schmitt-Trigger, welcher über diebeiden internen Bezugsspannungen V_{ref 1}, V_{ref 2} eine Hysterese-Schleife definiert. Der Zustand und die Veränderungen der DC-Eingangsspannung U_{Bat} werden mit der definierten Hysterese-Schleife verglichen. Auf diese Weise steht am Ausgang der ersten Vergleicherschaltung 32 das binäre Vergleichssignal 33, aufgrund dessen eine Umschaltung zwischen den Betriebsmodi der Vollbrückenschaltung 7 erfolgt.

Bei der Schaltungsanordnung gemäß Fig. 2, aber nicht notwendigerweise, wird die Vollbrückenschaltung 7 in den Vollbrückenmodus geschaltet, wenn das Vergleichssignal 33 den binären Wert Null angenommen hat; andererseits wird die Vollbrückenschaltung 7 in den Halbbrückenmodus geschaltet, wenn das binäre Vergleichssignal den binären Wert 1 angenommen hat.

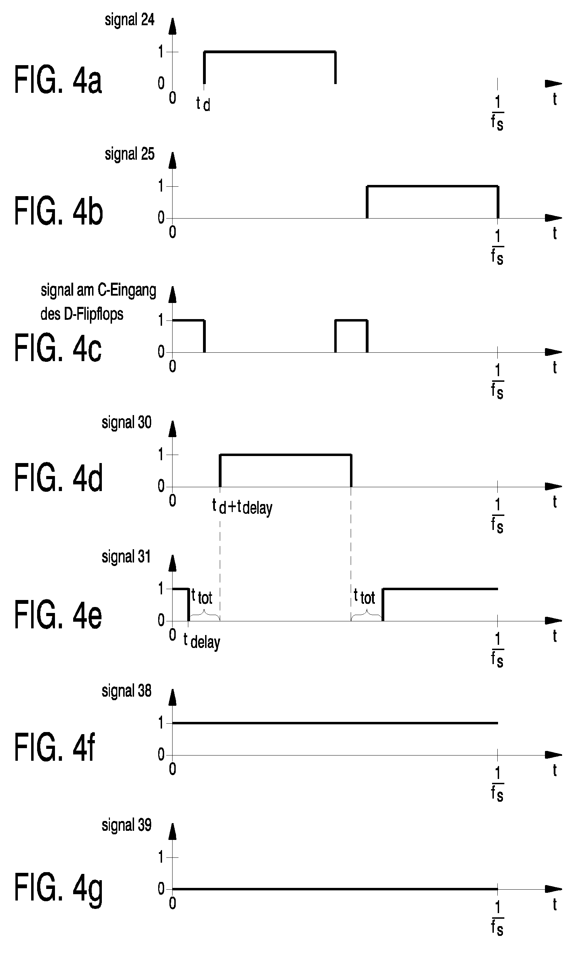

Die zweite Vergleicherschaltung 22 erzeugt das dritte und vierte Steuersignal gemäß den Figuren 4a und 4b nach Maßgabe durch das Ergebnis eines Vergleiches der Ausgangsgleichspannung Uₒᵤₜ des Konverters mit einer vorgegebenen dritten Vergleichsspannung V_{ref 3}.

Das binäre Vergleichssignal 33 sowie das dritte 25 und vierte 24 Steuersignal bilden die Eingangssignale zu der in Fig. 2 gezeigten Logikschaltung 34. Das dritte und vierte Steuersignal werden auf die Eingänge eines NOR-Gliedes 34-1 gegeben, dessen Ausgang auf den Takteingang C eines D-Flipflops 34-2 geschaltet ist. Der D-Eingang dieses Flipflops 34-2 wird durch das binäre Vergleichssignal 33 bedient. Die Logikschaltung 34 umfasst weiterhin ein AND-Glied 34-3, dessen erster Eingang durch das invertierte Ausgangssignal des Flipflops 34-2 und dessen zweiter Eingang durch das vierte Steuersignal 24 bedient wird. Am Ausgang dieses AND-Gliedes 34-3 wird das verzögerte zweite Steuersignal 36 ausgegeben. Die Logikschaltung 34 umfasst weiterhin ein OR-Glied 34-4, dessen erster Eingang mit dem nicht-invertierenden Ausgang Q des Flipflops 34-2 verbunden ist, und welches an seinem zweiten Eingang das dritte Steuersignal 25 empfängt. Am Ausgang dieses OR-Gliedes 34-4 wird das verzögerte erste Steuersignal 35 ausgegeben.
Die Erzeugung des ersten und zweiten Steuersignals durch die Logikschaltung 34 erfordert eine gewisse zusätzliche Zeit gegenüber der Erzeugung des dritten und vierten Steuersignals am Ausgang der zweiten Vergleicherschaltung 22. Zur Kompensation dieser Zeitdifferenz umfasst die Steuerschaltung 5 weiterhin die Verzögerungsschaltung 26, welche das dritte und vierte Steuersignal so verzögert, dass diese beiden Signale im richtigen Zeitverhältnis zu dem ersten und zweiten Steuersignal stehen. Zu diesem Zweck verzögert die Verzögerungsschaltung 26 das dritte und vierte Steuersignal jeweils um diejenige Zeit, welche die Logikschaltung 34 zur Erzeugung des ersten und zweiten Steuersignals aus dem dritten und vierten Steuersignal benötigt. Zur Erreichung dieser Verzögerung wird sowohl das dritte wie auch das vierte Steuersignal 25, 24 gemäß Fig. 2 durch eine Reihenschaltung von jeweils zwei NAND-Gliedern 26-1 ... 26-4 geführt.

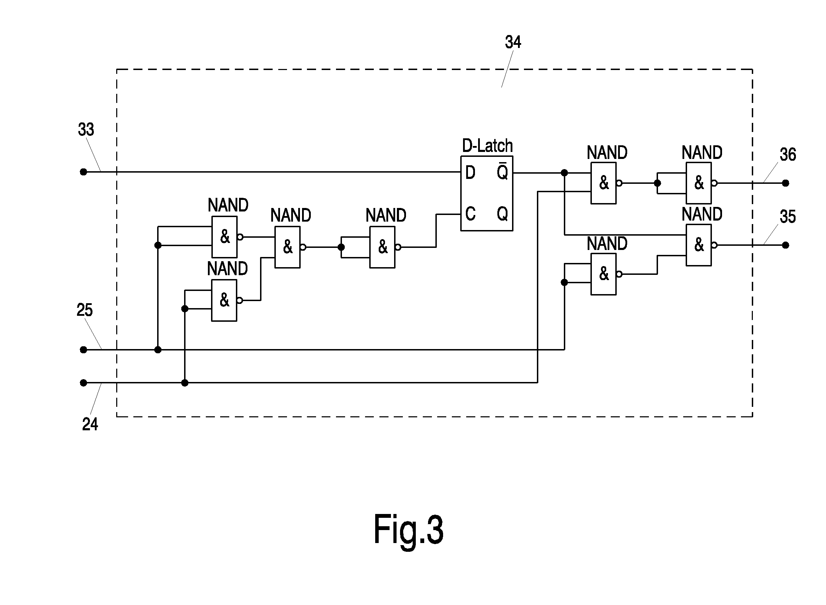

Fig. 3 zeigt eine zweite Ausführungsform der Logikschaltung 34, bei welcher die zuvor beschriebenen Funktionen des NOR-Gliedes 34-1, des AND-Gliedes 34-3 und des OR-Gliedes 34-4 jeweils durch reine NAND-Glieder realisiert werden. Diese spezielle Ausgestaltung der Logikschaltung 34 hat den Vorteil, dass dann insbesondere aufgrund der sowohl in der Logikschaltung 34 wie auch in der Verzögerungsschaltung 26 verwendeten Reihenschaltung von NAND-Gliedern eine bessere Anpassung der jeweiligen Verzögerungszeiten beider Schaltungen möglich ist. Eine daraus resultierende präzisere Synchronisation bzw. Zeitabstimmung der Steuersignale untereinander ermöglicht eine exaktere, d.h. zeitlich präzisere Ansteuerung der Schaltelemente S1-S4.

Fig. 4 zeigt die Verläufe der binären Steuersignale während einer Schaltperiode 1 /fₛ für den Fall, dass die Vollbrückenschaltung 7 im Halbbrücken-Betriebsmodus betrieben wird. In den Fig. 4a und 4b sind das vierte und dritte Steuersignal am Ausgang der zweiten Vergleicherschaltung 22 gezeigt. Fig. 4c zeigt den Verlauf eines Binärsignals am Ausgang des NOR-Gliedes 34-1, welches als Taktsignal dem C-Eingang des Flipflops 34-2 in der Logikschaltung 34 zugeführt wird.

Die Signale in den Fig. 4d - 4g entsprechen dem vierten, dritten, ersten und zweiten Steuersignal 30, 31, 38, 39 nach einer Pegelanpassung am Ausgang der Steuerschaltung 5.

Es ist zu erkennen, dass das Signal 30 in Fig. 4d, also das vierte Steuersignal zur Ansteuerung des Schaltelementes S4, im wesentlichen dem Signal 24 aus Fig. 4a entspricht, allerdings gegenüber diesem um eine Verzögerungszeit t_{delay} zeitverzögert ist. Die Zeitverzögerung wurde, wie oben beschrieben, durch die Verzögerungsschaltung 26 herbeigeführt. Analog gilt für das in Fig. 4e gezeigte Signal 31, also das dritte Steuersignal zur Ansteuerung des Schaltelementes S3, dass dieses um die gleiche Verzögerungszeit t_{delay} gegenüber dem Signal 25 in Fig. 4b zeitverzögert ist.

Ein Vergleich der Signalverläufe in den Fig. 4d und 4e zeigt, dass im Halbbrückenmodus die beiden Schaltelemente S3 und S4 mit einer Unterbrechung, d.h. einer Totzeit tₜₒₜ abwechselnd ein- und ausgeschaltet werden. Während dieser Totzeit sind die beiden Schaltelemente S3 und S4 ausgeschaltet. Darüber hinaus zeigen die Fig. 4f und 4g, dass das Schaltelement S1 in dem Halbbrückenmodus kontinuierlich eingeschaltet ist, während gleichzeitig das Schaltelement S2 kontinuierlich ausgeschaltet ist.

Fig. 5 zeigt im Unterschied zu Fig. 4 die Verläufe der Steuersignale für den Fall, dass die Vollbrückenschaltung 7 im Vollbrückenmodus, d.h. bei niedrigen DC-Eingangsspannungen betrieben wird. In diesem Modus entsprechen die in Fig. 5a - 5e gezeigten Signalverläufe denjenigen Signalverläufen, wie sie oben unter Bezugnahme auf die Fig. 4a - 4e beschrieben wurden. Daraus folgt insbesondere, dass die Schaltelemente S3 und S4, abgesehen von den Totzeiten, abwechselnd ein- und ausgeschaltet werden. Die Signalverläufe in den Fig. 5f und 5g lassen erkennen, dass im Vollbrückenmodus auch die Schaltelemente S1 und S2 unter Berücksichtigung der Totzeit tₜₒₜ abwechselnd ein- und ausgeschaltet werden. Genauer gesagt, werden, wie ein Vergleich der Fig. 5g mit 5d und 5f mit 5e zeigt, das Schaltelement S2 parallel zu dem Schaltelement S4 und das Schaltelement S1 parallel zu dem Schaltelement S3 angesteuert.

Erfindungsgemäß erfolgt eine Umschaltung vom Vollbrückenmodus in den Halbbrückenmodus oder umgekehrt, immer im ersten Totzeitintervall tₜₒₜ, nachdem sich das Vergleichssignal 33 geändert hat. Somit sind die Schaltelemente S1 ... S4 immer ausgeschaltet, wenn sich der Betriebsmodus ändert. Auf diese Weise wird die Belastung der Schaltelemente wie auch der passiven Komponenten des Resonanzleistungskonverters 3-1 in Fig. 1 gegenüber der Belastung der Bauteile in Fig. 7 reduziert, so dass diese Komponenten für geringere Leistungen ausgelegt werden können.

## Patentansprüche

1. Konverter zum Umsetzen einer DC-Spannung (U_{Bat}) in eine Ausgangsgleichspannung (Uₒᵤₜ), insbesondere bei TV- oder Computerbildschirmen, mit:
einer Vollbrückenschaltung (7), welche steuerbare Schaltelemente (S1...S4) aufweist, zum Zerhacken der DC-Spannung (U_{Bat}) in eine AC-Spannung (U∼) an ihrem Ausgang;
einem Schaltkreis (3) zum Wandeln der AC-Spannung (U∼) in die Ausgangs-Gleichspannung (U_{Out}) des Konverters; und
einer Steuerschaltung (5) zum Erzeugen von Steuersignalen zum Ansteuern der steuerbaren Schaltelemente (S1 ... S4) gemäß einem ersten oder einem zweiten Konverterbetriebsmodus, wobei eine Umschaltung zwischen den beiden Modi nach Maßgabe durch eine Vergleichssignal erfolgt, welches die Größe der DC-Spannung (U_{Bat}) repräsentiert;
**dadurch gekennzeichnet,**
**dass** die Steuerschaltung (5) die Steuersignale unter zusätzlicher Berücksichtigung der Ausgleichs-Gleichspannung (U_{Out}) des Konverters erzeugt; und
die Steuerschaltung (5) die Umschaltung von dem ersten in den zweiten Konverterbetriebsmodus oder umgekehrt nur während eines Totzeitintervalls tₜₒₜ vornimmt, währenddessen zumindest eines der Schaltelemente (S1 ... S4) ausgeschaltet ist.

2. Konverter nach Anspruch 1,
**dadurch gekennzeichnet,**
**dass** die Vollbrückenschaltung (7) zwei parallele Zweige mit jeweils 2 der in Reihe geschalteten steuerbaren Schaltelemente aufweist, die DC-Spannung (U_{Bat}) parallel zu den parallelen Z-weigen empfängt und die AC-Spannung (U∼) zwischen den jeweils 2 Schaltelementen der beiden parallelen Zeige ausgibt.

3. Konverter nach Anspruch 2,
**dadurch gekennzeichnet,**
**dass** die Steuerschaltung (5) aufweist:
eine erste Vergleicherschaltung (32) zum Erzeugen des Vergleichssignals als Binärsignal nach Maßgabe durch das Ergebnis eines Vergleiches der DC-Spannung (U_{Bat}) mit einer ersten und zweiten Vergleichsspannung (V_{ref 1}, V_{ref 2}); und
eine zweite Vergleicherschaltung (22) zum Erzeugen eines vierten der Steuersignale zum Ansteuern eines vierten der Schaltelemente (S4) sowie zum Erzeugen eines dritten der Steuersignale zum Ansteuern eines dritten der Schaltelemente (S3) nach Maßgabe durch das Ergebnis eines Vergleiches der Ausgangs-Gleichspannung (U_{Out}) des Konverters mit einer vorgegebenen dritten Vergleichsspannung (V_{ref 3}).

4. Konverter nach Anspruch 3,
**dadurch gekennzeichnet,**
**dass** die erste Vergleicherschaltung (32) als Schmitt-Trigger ausgebildet ist.

5. Konverter nach Anspruch 3 oder 4,
**dadurch gekennzeichnet,**
**dass** die Steuerschaltung (5) weiterhin aufweist:
eine Logikschaltung (34) zum Erzeugen eines ersten der Steuersignale zum Ansteuern eines ersten der Schaltelemente (S1) sowie zum Erzeugen eines zweiten der Steuersignale zum Ansteuern eines zweiten der Schaltelemente (S2) aus dem dritten und vierten Steuersignal im Ansprechen auf das binäre Vergleichssignal.

6. Konverter nach einem der Ansprüche 3 bis 5,
**dadurch gekennzeichnet,**
**dass** die Steuerschaltung (5) eine Verzögerungsschaltung (26) aufweist zum Verzögern des dritten und vierten Steuersignals um zumindest näherungsweise die Verarbeitungsdauer eines Signals durch die Logikschaltung (34).

7. Konverter nach einem der Ansprüche 3 bis 6,
**dadurch gekennzeichnet,**
**dass** die Steuerschaltung weiterhin zumindest eine Anpassungsschaltung (29, 37) aufweist zum Durchführen einer Pegelanpassung des verzögerten ersten, zweiten, dritten und/oder vierten Steuersignals an durch die zugehörigen Schaltelemente vorgegebenen Pegelerfordernisse.

8. Bildschirm, insbesondere für einen Computer oder für ein Fernsehgerät, mit einem Konverter nach einem der Ansprüche 1 bis 7.
